# EUROPEAN PATENT APPLICATION

(11) **EP 1 298 055 A2**
(43) Date of publication of application: **02.04.2003**
(21) Application number: 02256738.2
(22) Date of filing: 27.09.2002
(51) Int. Cl.: B64F 1/36

(54) **Baggage screening system**

(30) Priority: 29.09.2001 GB 0123492
(71) Applicant: Logan Fabricom Ltd, Hull East Yorkshire HU7 0DR (GB)
(72) Inventor: Morrell, Laurence, Hull, East Yorkshire HU8 9JB (GB)
(74) Representative: Walker, Antony James Alexander

(57) **Abstract**

A baggage screening system comprises a baggage screening unit (14) and an input conveyor line (22) for conveying baggage from a baggage input zone (20) through the screening unit (14) to sorting means (18) for selectively directing the baggage to one or other of (1) a reclaim channel (30) from which the baggage can be collected by a passenger and (2) a search channel (32) from which the baggage can be taken for searching.

## Description

The present invention concerns baggage screening systems and is applicable, for example, in the screening of baggage at airports for security purposes.

Conventional arrangements for screening of cabin baggage (sometimes referred to as "carry-on" baggage) at airports will be familiar to the reader. The baggage is placed upon a conveyor by means of which it is moved through a screening unit formed as an X-ray machine. An operator views an image of the baggage as it passes through the screening unit and thus decides whether the baggage can be cleared for security purposes and returned to the passenger, or must be hand searched by a colleague on its emergence from the screening unit.

It must be understood that the term "baggage" as used herein covers not only bags and luggage in general but also any item which a passenger may carry onto a vehicle, including, eg. coats, jackets, scarves, purses, etc.

A problem exists at some airports because passengers, often infrequent travellers, find difficulty in complying with the necessarily strict regime around the cabin baggage screening area. Baggage selected for manual searching is often removed by the passenger before it has been searched and security cleared. The problem is most acute at busy periods. To alleviate it has required over-manning the area, resulting in disproportionate cost.

Use has been made in some airports of a system utilising a powered roller turntable to sort cabin baggage downstream of the screening unit but this has been found to be unsuccessful in practice.

In accordance with the present invention, there is a baggage screening system comprising a baggage screening unit and an input conveyor line for conveying baggage from a baggage input zone through the screening unit to sorting means for selectively directing the baggage to one or other of (1) a reclaim channel from which the baggage can be collected by a passenger and (2) a search channel from which the baggage can be taken for searching.

The system could for example be used in automated "sniffing" for explosives, the screening unit being a suitable detector and the sorting means being electronically controlled in response to the detector's output.

More typically, however, the screening unit is connected to a visual display upon which images of the baggage are displayed in operation and the sorting means is controllable by an operator viewing the images.

The screening unit in such an embodiment of the invention may be an X-ray machine.

A preferred embodiment of the present invention further comprises a control unit by means of which the operator determines to which of the two channels baggage is directed, the control unit being such that an input from the operator is required to cause the sorting means to direct baggage to the reclaim channel and in the absence of such input the baggage is directed to the search channel.

In this way a failsafe is provided against inattention on the part of the operator, since lack of operator input causes baggage to be directed for searching, rather than returned to the passenger.

The control unit is preferably capable of being set to divert a proportion of baggage to the search channel despite contrary operator input. Hence it can be arranged that a sample - preferably a random sample - of the baggage will be directed for searching.

Preferably the sorting means comprises a sort conveyor movable between a first position in which it leads to the reclaim channel and a second position in which it leads to the search channel.

The sort conveyor may be pivotally mounted such as to be rotatable between the first and second positions.

In a further preferred embodiment, the search channel is provided with a search conveyor leading to a search zone and the reclaim channel is provided with a reclaim conveyor leading to a reclaim zone.

It is particularly preferred that the sort conveyor is a belt conveyor comprising a projecting tongue over which the belt passes, the tongue being arranged to overlap one or other of the search conveyor and the reclaim conveyor according to the sort conveyor's position and thereby to transfer baggage thereto.

In a particularly preferred embodiment, the system further comprises a barrier alongside the path taken by the baggage as it moves through the system to prevent access to the baggage from one side of the barrier as it moves through the system.

Passengers are typically directed to the aforementioned side of the barrier and hence are prevented from access to the baggage.

Preferably the system further comprises a barrier interposed between the search and reclaim channels to prevent access from one side of the barrier to baggage sent for searching.

Specific embodiments of the present invention will now be described, by way of example only, with reference to the accompanying drawings, in which:
Fig. 1 is a perspective illustration of a baggage screening system embodying the present invention;
Fig. 2 is a further perspective illustration of the same system; and
Fig. 3 is a perspective view from one side of portions of three conveyors used in the same system;
Fig. 4 is a plan elevation of part of one baggage handling path used in the system; and
Fig. 5 is a side elevation of the same part shown in Fig. 4.

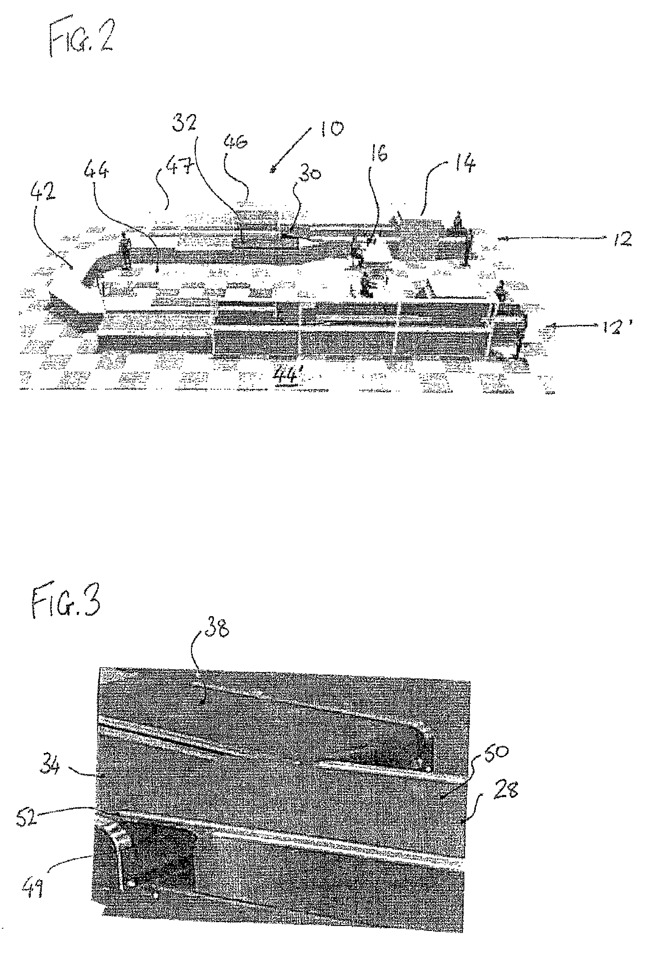

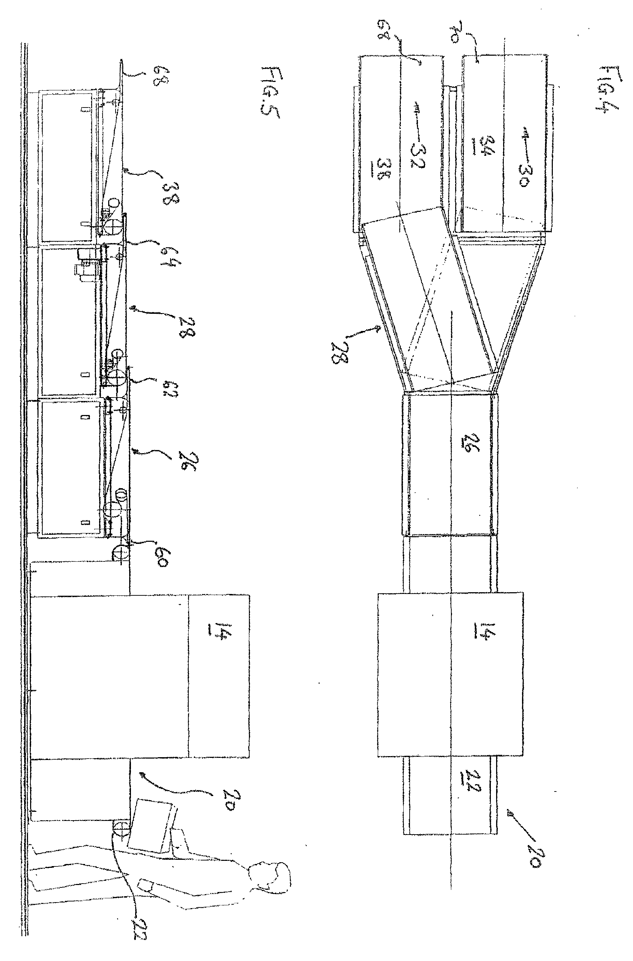

The system 10 illustrated in the drawings has two baggage handling paths 12, 12' in order to provide for large throughput of baggage, each path having its own screening unit 14, 14' formed as a conventional X-ray machine. It will be apparent from the drawing that the two paths are essentially identical, except that one is a mirror image of the other, and for the sake of clarity only one of the paths, item 12, will be referred to in the following description. Figs. 4 and 5 show only a part of this path. This path is controlled by an operator seated at a control terminal 16 comprising a visual display unit (VDU) 17 for display of images received from the screening unit 14 and a keyboard or control panel 18. Baggage is conveyed through the system on belt-type conveyors, considered to be highly effective in handling the broad range of different objects carried onto aeroplanes or other forms of transport. From a baggage input zone 20 an input conveyor 22 carries the baggage through the screening unit 14 whose housing is in conventional manner open ended to enable throughput of baggage.

As the baggage passes through the screening unit, an X-ray image thereof is displayed on the VDU 17 and based on study of the image the operator determines whether the baggage can be security cleared and returned to the passenger, or requires manual searching. An input is required of the operator to clear the baggage for return to the passenger. In the absence of such input the baggage is automatically sent for manual searching. A failsafe is thus provided against inattention on the part of the operator.

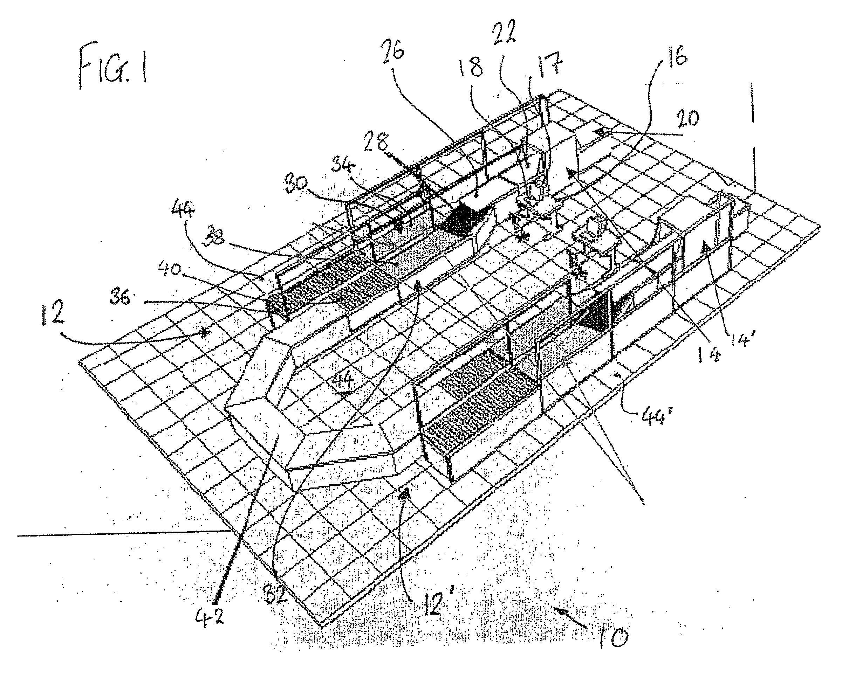

Baggage emerging from the screening unit 14 is moved onward by an intermediate conveyor 26 and is deposited thereby onto a "luffing" or sort conveyor 28 by means of which, in response to the operator's control input, the baggage is directed to either a reclaim path 30 or a search path 32. The sort conveyor 28 is itself a belt conveyor pivotally mounted for movement between a first position (seen in Fig. 1) in which it leads to the reclaim path 30 and a second position in which it leads to the search path 32. Powered means are provided for moving the sort conveyor between the first and second positions.

Baggage sent along the reclaim path 30 is passed by a reclaim conveyor 34 onto a roller bed 36 from which it can be collected by the passenger.

Baggage sent along the search path 32 is passed by a search conveyor 38 onto a further roller bed 40 from which it is taken by a searcher to a "U" shaped tabletop 42 upon which the required manual search is carried out. The two limbs of the "U" shaped table top 42 lead to the two channels 14, 14' and in this way a generally enclosed region 44 is defined from which passengers are excluded. Passengers move from the baggage input zone 20 to the roller bed 36 or tabletop 42 where baggage is to be reclaimed along exterior walkways 44, 44'. A first barrier 46 separates passengers moving along walkway 44 from the conveyance path downstream of the screening unit 14, preventing passengers from collecting their baggage prior to its sorting. A second barrier 47 is interposed between the search and reclaim paths 30, 32 so that passengers cannot collect baggage from the reclaim path.

The conveyors utilised in the illustrated system have "knife" edges. Figs. 3 and 5 show the relevant constructional details, the sort conveyor again being seen at 28 and the reclaimed and search conveyors at 34 and 38 respectively. The sort conveyor is seen to have a generally horizontally projecting tongue region 49 carrying the conveyor belt 50 and terminating in a small radius at 52. The tongue overlaps the relevant conveyor 34, 38 to transfer even small objects thereto without risk of such objects falling through any gap between conveyors. Likewise the input 22, intermediate 26, reclaim 34 and search 38 conveyors all have respective projecting tongues 60, 62, 64, 68, 70 (see Fig. 5 in particular) to enable transfer of objects from one to the other, and finally to the roller beds 36, 40.

## Claims

1. A baggage screening system comprising a baggage screening unit and an input conveyor line for conveying baggage from a baggage input zone through the screening unit to sorting means for selectively directing the baggage to one or other of (1) a reclaim channel from which the baggage can be collected by a passenger and (2) a search channel from which the baggage can be taken for searching.

2. A baggage screening system according to claim 1, wherein the screening unit comprises a detector for detecting the presence of explosives and the sorting means is electronically controlled in response to the detector's output.

3. A baggage screening system according to claim 1, wherein the screening unit is connected to a visual display upon which images of the baggage are displayed in operation and the sorting means is controllable by an operator viewing the images.

4. A baggage screening system according to claim 3, wherein the screening unit is an X-ray machine.

5. A baggage screening system according to claim 3, 4 or 5, further comprising a control unit by means of which the operator determines to which of the two channels baggage is directed, the control unit being such that an input from the operator is required to cause the sorting means to direct baggage to the reclaim channel and in the absence of such input the baggage is directed to the search channel.

6. A baggage screening system according to claim 5, wherein the control unit is capable of being set to divert a proportion of baggage to the search channel despite contrary operator input.

7. A baggage screening system according to any one of claims 1 to 6, wherein the sorting means comprises a sort conveyor movable between a first position in which it leads to the reclaim channel and a second position in which it leads to the search channel.

8. A baggage screening system according to claim 7, wherein the sort conveyor is pivotally mounted such as to be rotatable between the first and second positions.

9. A baggage screening system according to any preceding claim, wherein the search channel is provided with a search conveyor leading to a search zone and the reclaim channel is provided with a reclaim conveyor leading to a reclaim zone.

10. A baggage screening system according to claim 9, wherein the sort conveyor is a belt conveyor comprising a projecting tongue over which the belt passes, the tongue being arranged to overlap one or other of the search conveyor and the reclaim conveyor according to the sort conveyor's position and thereby to transfer baggage thereto.

11. A baggage screening system according to any preceding claim, wherein the system further comprises a barrier alongside the path taken by the baggage as it moves through the system to prevent access to the baggage from one side of the barrier as it moves through the system.

12. A baggage screening system according to any preceding claim, wherein the system further comprises a barrier interposed between the search and reclaim channels to prevent access from one side of the barrier to baggage sent for searching.
